(19) Europäisches Patentamt
European Patent Office
Office européen des brevets

(11) **EP 2 701 260 B1**

(12) **EUROPÄISCHE PATENTSCHRIFT**

(45) Veröffentlichungstag und Bekanntmachung des Hinweises auf die Patenterteilung:
**14.01.2015   Patentblatt 2015/03**

(51) Int Cl.:
***H02J 1/10*** *(2006.01)*

(21) Anmeldenummer: **12181239.0**

(22) Anmeldetag: **21.08.2012**

(54) **Verfahren zum Betreiben eines Automatisierungsgerätes**

Method for operating an automation device

Procédé destiné au fonctionnement d'un appareil d'automatisation

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**26.02.2014   Patentblatt 2014/09**

(73) Patentinhaber: **Siemens Aktiengesellschaft 80333 München (DE)**

(72) Erfinder: **Kort, Valentin 76829 Landau (DE)**

(56) Entgegenhaltungen:
**WO-A1-87/00655**

**Beschreibung**

Die Erfindung betrifft ein Verfahren zum Betreiben eines Automatisierungsgerätes, welches mindestens ein an eine Versorgungsleitung angeschlossenes Senkenmodul und mindestens zwei Quellenmodule zur Versorgung der Senkenmodule mit elektrischer Energie aufweist, wobei die Quellenmodule jeweils mit einem an einen Bus angeschlossenen Lastverteilungs-Controller versehen sind, in welchem eine Kennlinie hinterlegt ist, welche einen auf die Nennleistung des jeweiligen Quellenmoduls bezogenen prozentualen Auslastungsgrad dieses Quellenmoduls in Abhängigkeit einer an diesem Bus anliegenden Spannung repräsentiert. Ferner betrifft die Erfindung ein Automatisierungsgerät zur Durchführung des Verfahrens.

Häufig sind parallel geschaltete Quellenmodule (Stromversorgungen) jeweils mit so genannten Loadshore-Controllern versehen, welche dazu vorgesehen sind, die Auslastung der Stromversorgungen zu symmetrieren. Für den Fall, dass sich die Leistungsabgabe einer der Stromversorgungen des Automatisierungsgerätes erhöht, z. B. weil eine weitere Baugruppe bzw. ein weiteres Senkenmodul diesem Automatisierungsgerät hinzugefügt wird oder eine bereits vorhandene Baugruppe von einem STOPP- in einen RUN-Betrieb schaltet, führt dies nur kurzzeitig zu einer unsymmetrischen Lastverteilung; denn die genannten Controller bewerkstelligen unverzüglich eine symmetrische Lastverteilung, z. B. in der Art, dass jede der Stromversorgungen 80 % oder 100 % seiner Nennleistung zur Versorgung des Automatisierungsgerätes mit elektrischer Energie abgibt.

In den Loadshore-Controllern ist jeweils eine Kennlinie hinterlegt, welche einen auf die Nennleistung des jeweiligen Quellenmoduls bezogenen prozentualen Auslastungsgrad dieses Quellenmoduls in Abhängigkeit einer an diesem Bus (Loadshare-Bus) anliegenden Spannung (Loadshare-Spannung) repräsentiert. Beispielsweise weist eine 5 V-Spannung darauf hin, dass zwei Quellenmodule jeweils zu 50% ausgelastet sind, wobei ein 65 W-Quellenmodul in diesem Fall 32,5 W und ein 20 W- Quellenmodul 10 W - also eine Gesamtleistung von 42,5 W - den an eine Versorgungsleitung angeschlossenen Senkenmodulen bereitstellt.

Die Quellenmodule weisen einen lastabhängigen Wirkungsgrad auf, welcher die Abgabeleistung bezogen auf die Aufnahmeleistung widerspiegelt. Für den Fall, dass ein Quellenmodul im oberen Leistungsbereich betrieben wird, ist der Wirkungsgrad deutlich besser, als in einem Betrieb des Quellenmoduls im unteren Leistungsbereich. Beispielsweise beträgt die Verlustleistung eines 25 W-Quellenmoduls bei einem Auslastungsgrad von 50%, was einer Leitungsabgabe von 12,5 W entspricht, ca. 2,2 W, dagegen bei einem Auslastungsgrad von ca. 80%, was einer Leitungsabgabe von ca. 20 W entspricht, ca. 3 W.

Es kann vorkommen, dass ein Automatisierungsgerät für den Betrieb einer Vielzahl von Senkenmodulen und daher für einen hohen Leistungsbedarf ausgelegt ist, der tatsächliche Leistungsbedarf allerdings aufgrund nicht benötigter Senkenmodule weit geringer ist. Dies bedeutet, dass die bereitgestellten bzw. eingesetzten Quellenmodule mit einem verringerten Auslastungsgrad betrieben werden, um ihre Leistungsabgabe der verminderten Bedarfsleistung anzupassen. Der Wirkungsgrad des jeweiligen Quellenmoduls verschlechtert und die Verlustleistung relativ zu der bzw. bezogen auf die Abgabeleistung des jeweiligen Quellenmoduls erhöht sich.

Der Erfindung liegt daher die Aufgabe zugrunde, ein Verfahren der eingangs genannten Art anzugeben, das einen Betrieb des Automatisierungsgeräts mit einer verminderten Verlustleistung ermöglicht. Darüber hinaus ist ein Automatisierungsgerät zur Durchführung des Verfahrens zu schaffen.

Diese Aufgabe wird im Hinblick auf das Verfahren durch die im kennzeichnenden Teil des Anspruch 1 angegebenen, bezüglich des Automatisierungsgerätes durch die im kennzeichnenden Teil des Anspruchs 2 angegebenen Maßnahmen gelöst.

Die Erfindung geht von der Idee aus, die ohnehin in jedem Quellenmodul bzw. in jeder Stromversorgung hinterlegte Kennlinie eines Lastverteilungs-Controllers, welche den auf die Nennleistung des jeweiligen Quellenmoduls bezogenen prozentualen Auslastungsgrad dieses Quellenmoduls in Abhängigkeit einer an dem Lastverteilungs-Bus anliegenden Spannung repräsentiert, zur Verminderung der Verlustleistung des Automatisierungsgerätes zu nutzen. Unabhängig von der Nennleistung des jeweiligen Quellenmoduls stimmt der prozentuale Auslastungsgrad aller Quellenmodule überein. Beispielsweise zeigt eine 5V-Spannung am Bus einen Auslastungsgrad von 40 % an, was bedeutet, dass alle an der Versorgungsleitung angeschlossenen Quellenmodule lediglich zu 40 % ausgelastet sind. Für den Fall, dass z. B. Quellenmodule mit einer Nennleistung von 30 W und 25 W angeschlossen sind, beträgt die aktuelle Leistungsabgabe des 30 W-Quellenmoduls lediglich 12 W und die des 25 W-Quellenmoduls lediglich 10 W. Der prozentuale Auslastungsgrad des Automatisierungsgerätes liegt somit bezüglich der Gesamt-Leistungsabgabe der aktuell an der Versorgungsleitung angeschlossenen Quellenmodule ebenfalls bei 40 %, wobei bei diesem Auslastungsgrad die Verlustleistung der Quellenmodule bzw. des Automatisierungsgerätes hoch ist. Für den Fall, dass ein weiteres Quellenmodul an die Versorgungsleitung angeschlossen wird, verringert sich der Auslastungsgrad unter 40 % und die Verlustleistung erhöht sich.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:

Figur 1     eine Kennlinie eines Lastverteilungs-Controllers einer Stromversorgung und

Figur 2      ein Prinzipschaltbild von Bestandteilen eines Automatisierungsgerätes.

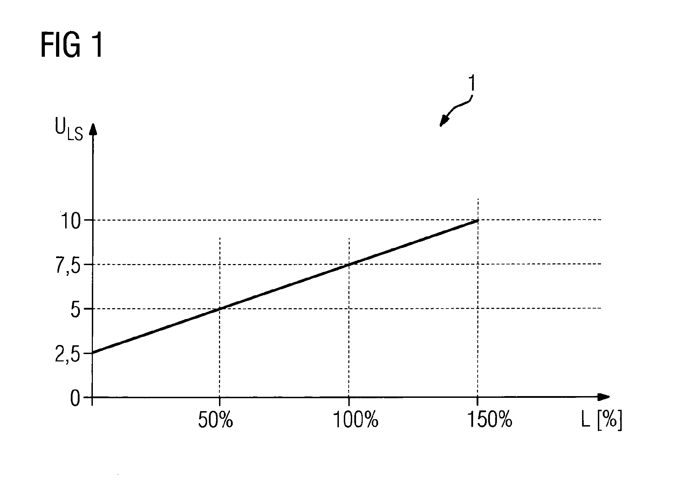

In Figur 1 ist mit 1 eine Kennlinie eines Lastverteilungs-Controllers (Loadshare-Controllers) bezeichnet, welche einen auf die Nennleistung eines Quellenmoduls bezogenen prozentualen Auslastungsgrad L des Quellenmoduls in Abhängigkeit einer an einem so genannten Loadshare-Bus (LS-Bus) anliegenden Spannung $U_{LS}$ darstellt. Der Auslastungsgrad L des Quellenmoduls ergibt sich zu:

$$L = \frac{aktuelle\ Leistungsabgabe}{Nennleistung} \times 100\ \%$$

Die Spannung $U_{LS}$ wird von einer Auswerteeinheit des Quellenmoduls an diesem LS-Bus erfasst, an welchen alle Lastverteilungs-Controller von weiteren Quellenmodulen eines Automatisierungsgerätes angeschlossen sind. In jedem Lastverteilungs-Controller oder in jeder Auswerteeinheit ist eine derartige Kennlinie 1 hinterlegt, auf welche die jeweilige Auswerteeinheit zugreifen kann. Für den Fall, dass eine Spannung $U_{LS}$ von 5 V erfasst wird, erkennen die Auswerteeinheiten mittels der Kennlinie 1, dass die an eine Versorgungsleitung des Automatisierungsgerätes angeschlossenen Quellenmodule zu 50 % ausgelastet sind, wobei um dies zu erkennen, das jeweilige Quellenmodul nicht an die Versorgungsleitung angeschlossen sein muss. Der Auslastungsgrad des Automatisierungsgerätes im Hinblick auf die Gesamt-Leistungsabgabe dieser Quellenmodule kann einfach aus dem Auslastungsgrad eines der angeschlossenen Quellenmodule abgeleitet werden, weil der Auslastungsgrad des Automatisierungsgerätes dem aller angeschlossenen Quellenmodule entspricht.

Jede der Auswerteeinheiten ermittelt - wie im Folgenden noch gezeigt wird - aus der Kennlinie 1 nach dem Einschalten und während des Hochlaufs des Automatisierungsgerätes, währenddessen die Quellenmodule an die Versorgungsleitung anschließbar sind, aus der am LS-Bus erfassten Spannung den Auslastungsgrad L des Automatisierungsgerätes, um in Abhängigkeit dieses ermittelten Auslastungsgrades mittels eines steuerbaren Schalters das jeweilige Quellenmodul an die Versorgungsleitung anzuschließen bzw. mit dieser zu verbinden. Als Schwellwert zum Anschließen eines weiteren Quellenmoduls an die Versorgungsleitung ist z. B. ein Auslastungsgrad L von 80 % vorgesehen. Ist der aktuelle Auslastungsgrad L gleich diesem Schwellwert oder liegt dieser unter diesem Schwellwert von 80 % wird kein weiteres Quellenmodul an die Versorgungsleitung angeschlossen, dieses bleibt im Hinblick auf die Energieeinspeisung abgeschaltet.

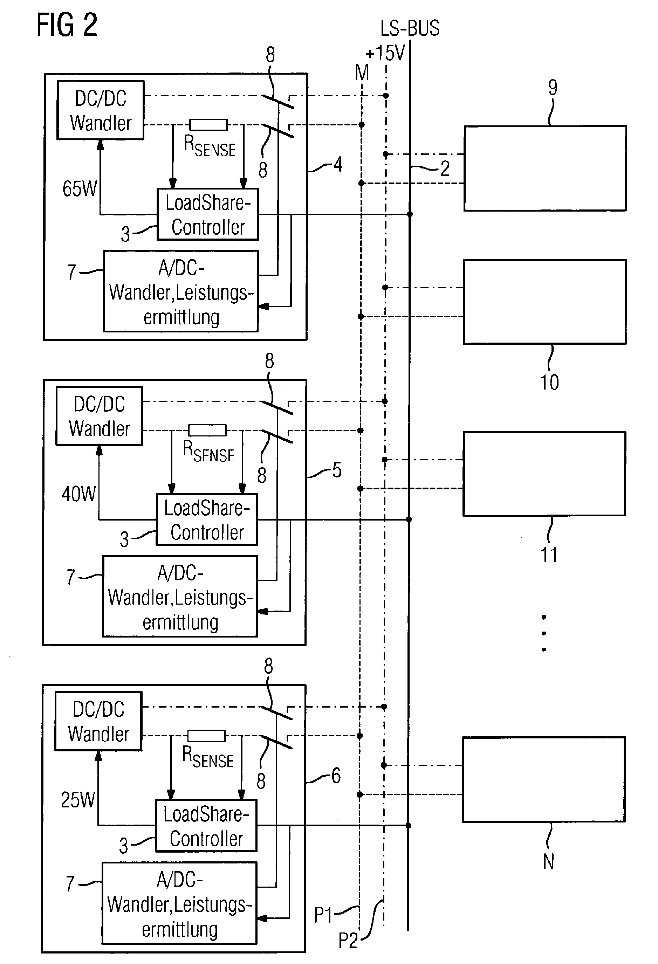

Im Folgenden wird dazu auf Figur 2 verwiesen, in der ein Prinzipschaltbild von Bestandteilen eines Automatisierungsgerätes dargestellt ist.

An einen LS-Bus 2 sind Lastverteilungs-Controller 3 von Quellenmodulen 4, 5, 6 angeschlossen, von denen z. B. das Quellenmodul 6 als CPU-Modul des Automatisierungsgerätes ausgebildet sein kann. Die Quellenmodule 4, 5, 6 sind jeweils mit einer Auswerteeinheit 7 und einem steuerbaren Schalter 8 versehen und versorgen Senkenmodule 9, 10, 11, ... N mit elektrischer Leistung, wobei die Senkenmodule direkt an eine Versorgungsleitung in Form von Potentialleitungen P1, P2 angeschlossen sind. Die Senkenmodule 9, 10, 11, ... N sind beispielsweise als analoge oder als digitale Ein-/Ausgabebaugruppen ausgebildet. Die Quellenmodule 4, 5, 6 sind in Abhängigkeit des Auslastungsgrades über die steuerbaren Schalter 8 an die Potentialleitungen P1, P2 anschließbar.

Es wird im Folgenden angenommen, dass die Kennlinie 1 (Figur 1) in den jeweiligen Auswerteeinheiten 7 hinterlegt ist und das Automatisierungsgerät eingeschaltet wird. Ferner wird angenommen, dass das Quellenmodul 4 für eine Nennleistung von 65 W, das Quellenmodul 5 für eine Nennleistung von 40 W und das CPU-Modul 6 für eine Nennleistung von 25 W ausgelegt ist und die Senkenmodule 80 W Leistung aufnehmen. Nach dem Einschalten des Automatisierungsgerätes sind die Quellenmodule 4, 5, 6 noch nicht an die Potentialleitungen P1, P2 angeschlossen, wodurch die Senkenmodule 9, 10, 11, ... N noch nicht mit elektrischer Energie versorgt werden. Lediglich die für den Betrieb der Quellenmodule 4, 5, 6 erforderlichen Schaltungs- bzw. Bestandteile, z. B. für den Betrieb des Lastverteilungs-Controllers 3 sowie der Auswerteeinheit 7, werden mit einer geeigneten Spannung versorgt. Die Auswerteeinheiten 7 erkennen während des Hochlaufs des Automatisierungsgerätes, dass keine Spannung am LS-Bus anliegt, wodurch eines der Quellenmodule 4, 5, 6 mittels des jeweiligen steuerbaren Schalters 8 an die Potentialleitungen P1, P2 angeschlossen wird. Für den Fall, dass z. B. die Auswerteeinheit 7 des Quellenmoduls 4 als erste erkennt, dass keine Spannung am LS-Bus 2 anliegt, steuert diese Auswerteeinheit 7 ihren Schalter 3 derart an, dass dieser schließt und das 65 W-Quellenmodul 4 mit den Potentialleitungen P1, P2 zur Energieversorgung der Senkenmodule 9, 10, 11, ... N verbindet. Das 65 W-Quellenmodul 4 ist kurzzeitig überlastet, weil der Leistungsbedarf der Senkenmodule 9, 10, 11, ... N 80 W beträgt. Das 65 W-Quellenmodul 4 beaufschlagt kurzzeitig den LS-Bus 2 mit einer Spannung von ca. 9 V, was den Auswerteeinheiten 7 der Quellenmodule 5, 6 anzeigt, dass der Auslastungsgrad L des bereits angeschlossenen Quellenmoduls 4 und somit des Automatisierungsgerätes bei ca. 120 % liegt. Für den Fall, dass die Auswerteeinheit 7 des 40 W-Quellenmoduls 5 vor der Auswerteeinheit 7 des 25 W-Quellenmoduls 6 die Spannung am LS-Bus einliest und erkennt, dass der aktuelle Auslastungsgrad L ca. 120 % - also oberhalb der Schwelle von 80 % liegt - verbindet die Auswerteeinheit 7 des 40 W-Quellenmoduls 5 dieses Quellenmodul 5 mit den Potentialleitungen P1, P2. Die beiden angeschlossenen Quellenmodule 4, 5 versorgen nun gemeinsam die Senkenmodule 9, 10, 11, ... N mit 80 W, was bedeutet, dass diese beiden Quellenmodule 4, 5 lediglich zu 76 % ausgelastet sind und der Auslastungsgrad L somit unterhalb der vorgegebenen Schwelle von 80 % liegt. Aufgrund dieses geringen Auslastungsgrades L der Quellenmodule 4, 5 und somit des Automatisierungsgerätes braucht kein weiteres Quellenmodul an die Potentialleitungen P1, P2 angeschlossen werden. Würde ein weiteres Quellenmodul angeschlossen werden, würde sich der Auslastungsgrad weiter vermindern und die Verlustleistung weiter erhöhen.

Die Quellenmodule 4, 5 beaufschlagen den LS-Bus 2 mit einer dem Auslastungsgrad von 76 % entsprechenden Spannung von ca. 6,8 V entsprechend der Kennlinie 1. Die Auswerteeinheit 7 des Quellenmoduls 5 erkennt aufgrund dieser Spannung am LS-Bus 2 und mittels der in dieser Auswerteeinheit 7 hinterlegten Kennlinie 1 den geringen Auslastungsgrad L von 76 %. Dieser Auslastungsgrad L liegt unterhalb der vorgegebenen Schwelle von 80 %, wodurch die Auswerteeinheit 7 des Quellenmoduls 6 den steuerbaren Schalter 3 offen lässt und somit das Quellenmodul 6 nicht mit den Potentialleitungen P1, P2 verbunden wird.

Die Erfindung lässt sich damit wie folgt zusammenfassen: Ein Verfahren zum Betreiben eines Automatisierungsgerätes, welches mindestens ein an eine Versorgungsleitung P1, P2 angeschlossenes Senkenmodul 9, 10, 11, ... N und mindestens zwei Quellenmodule 4, 5, 6 zur Versorgung des mindestens einen Senkenmoduls 9, 10, 11, ... N mit elektrischer Energie aufweist, wobei die Quellenmodule 4, 5, 6 jeweils mit einem an einen Bus 2 angeschlossenen Lastverteilungs-Controller 3 versehen sind, in welchem eine Kennlinie 1 hinterlegt ist, die einen auf die Nennleistung des jeweiligen Quellenmoduls 4, 5, 6 bezogenen prozentualen Auslastungsgrad L dieses Quellenmoduls 4, 5, 6 in Abhängigkeit einer an diesem Bus 2 anliegenden Spannung $U_{LS}$ repräsentiert, zeichnet sich dadurch aus, dass mittels einer Auswerteeinheit 7 jedes Quellenmoduls 4, 5, 6 während des Hochlaufs des Automatisierungsgerätes

- die am Bus 2 anliegende Spannung $U_{LS}$ erfasst wird,
- aus dieser Spannung $U_{LS}$ und der Kennlinie 1 der prozentuale Auslastungsgrad L des Automatisierungsgerätes im Hinblick auf die Gesamt-Leistungsabgabe der aktuell an der Versorgungsleitung P1, P2 angeschlossenen Quellenmodule 4, 5, 6 abgeleitet wird, und
- in Abhängigkeit des Auslastungsgrades L ein steuerbarer Schalter 8 zum Anschließen des jeweiligen Quellenmoduls 4, 5, 6 an die Versorgungsleitung P1, P2 angesteuert wird.

Dadurch wird der Betrieb des Automatisierungsgerätes mit einer verminderten Verlustleistung ermöglicht.

**Patentansprüche**

1. Verfahren zum Betreiben eines Automatisierungsgerätes, welches mindestens ein an eine Versorgungsleitung (P1, P2) angeschlossenes Senkenmodul (9, 10, 11, ... N) und mindestens zwei Quellenmodule (4, 5, 6) zur Versorgung des mindestens einen Senkenmoduls (9, 10, 11, ... N) mit elektrischer Energie aufweist, wobei die Quellenmodule (4, 5, 6) jeweils mit einem an einen Bus (2) angeschlossenen Lastverteilungs-Controller (3) versehen sind, in welchem eine Kennlinie (1) hinterlegt ist, die einen auf die Nennleistung des jeweiligen Quellenmoduls (4, 5, 6) bezogenen prozentualen Auslastungsgrad (L) dieses Quellenmoduls (4, 5, 6) in Abhängigkeit einer an diesem Bus (2) anliegenden Spannung ($U_{LS}$) repräsentiert, **dadurch gekennzeichnet, dass** mittels einer Auswerteeinheit (7) jedes Quellenmoduls (4, 5, 6) während des Hochlaufs des Automatisierungsgerätes

    - die am Bus (2) anliegende Spannung ($U_{LS}$) erfasst wird,
    - aus dieser Spannung ($U_{LS}$) und der Kennlinie (1) der prozentuale Auslastungsgrad (L) des Automatisierungsgerätes im Hinblick auf die Gesamt-Leistungsabgabe der aktuell an der Versorgungsleitung (P1, P2) angeschlossenen Quellenmodule (4, 5, 6) abgeleitet wird, und
    - in Abhängigkeit des Auslastungsgrades (L) ein steuerbarer Schalter (8) zum Anschließen des jeweiligen Quellenmoduls (4, 5, 6) mit der Versorgungsleitung (P1, P2) angesteuert wird.

2. Automatisierungsgerät mit

    - mindestens einem an eine Versorgungsleitung (P1, P2) angeschlossenen Senkenmodul (9, 10, 11, ... N),
    - mindestens zwei Quellenmodulen (4, 5, 6) zur Versorgung des mindestens einen Senkenmoduls (9, 10, 11, ... N) mit elektrischer Energie, wobei die Quellenmodule (4, 5, 6) jeweils mit einem an einen Bus (2) angeschlossenen Lastverteilungs-Controller (3) versehen sind, in welchem eine Kennlinie (1) hinterlegt ist, die einen auf die Nennleistung des jeweiligen Quellenmoduls (4, 5, 6) bezogenen prozentualen Auslastungsgrad (L) dieses Quellenmoduls (4, 5, 6) in Abhängigkeit einer an diesem Bus (2) anliegenden Spannung ($U_{LS}$) repräsentiert, **dadurch gekennzeichnet, dass** jedes Quellenmodul (4, 5, 6) mit einer Auswerteeinheit (7) versehen ist, die dazu ausgebildet ist, während des Hochlaufs des Automatisierungsgerätes die am Bus (2) anliegende Spannung ($U_{LS}$) zu erfassen und aus dieser Spannung ($U_{LS}$) und der Kennlinie (1) den prozentualen Auslastungsgrad (L) des Automatisierungsgerätes im Hinblick auf die Gesamt-Leistungsabgabe der aktuell an der Versorgungsleitung (P1, P2) angeschlossenen Quellenmodule (4, 5, 6) abzuleiten, und diese Auswerteeinheit (7) ferner dazu ausgebildet ist, in Abhängigkeit des Auslastungsgrades (L) einen steuerbaren Schalter (8) zum Anschließen des Quellenmoduls (4, 5, 6) an die Versorgungsleitung (P1, P2) anzusteuern.

**Claims**

1. Method for operating an automation device having at least one sink module (9, 10, 11, ... N) connected to a supply line (P1, P2) and at least two source modules (4, 5, 6) for supplying the at least one sink module (9, 10, 11, ... N) with electrical energy, the source modules (4, 5, 6) each being provided with a load distribution controller (3) which is connected to a bus (2) and stores a characteristic curve (1) representing a percentage degree of utilization (L) of this source module (4, 5, 6), which is based on the nominal power of the respective source module (4, 5, 6), on the basis of a voltage ($U_{LS}$) applied to this bus (2), **characterized in that**, by means of an evaluation unit (7) of each source module (4, 5, 6), during the start-up of the automation device,

   - the voltage ($U_{LS}$) applied to the bus (2) is recorded,
   - the percentage degree of utilization (L) of the automation device with respect to the total power output of the source modules (4, 5, 6) currently connected to the supply line (P1, P2) is derived from this voltage ($U_{LS}$) and the characteristic curve (1), and
   - a controllable switch (8) for connecting the respective source module (4, 5, 6) to the supply line (P1, P2) is actuated on the basis of the degree of utilization (L).

2. Automation device having

   - at least one sink module (9, 10, 11, ... N) connected to a supply line (P1, P2),
   - at least two source modules (4, 5, 6) for supplying the at least one sink module (9, 10, 11, ... N) with electrical energy, the source modules (4, 5, 6) each being provided with a load distribution controller (3) which is connected to a bus (2) and stores a characteristic curve (1) representing a percentage degree of utilization (L) of this source module (4, 5, 6), which is based on the nominal power of the respective source module (4, 5, 6), on the basis of a voltage ($U_{LS}$) applied to this bus (2),

**characterized in that**
each source module (4, 5, 6) is provided with an evaluation unit (7) which is designed, during the start-up of the automation device, to record the voltage ($U_{LS}$) applied to the bus (2) and to derive the percentage degree of utilization (L) of the automation device with respect to the total power output of the source modules (4, 5, 6) currently connected to the supply line (P1, P2) from this voltage ($U_{LS}$) and the characteristic curve (1), and this evaluation unit (7) is also designed to actuate a controllable switch (8) for connecting the source module (4, 5, 6) to the supply line (P1, P2) on the basis of the degree of utilization (L).

**Revendications**

1. Procédé pour faire fonctionner un appareil d'automatisation, qui a au moins un module ( 9, 10, 11, ... N ) d'abaissement raccordé à une ligne ( P1, P2 ) d'alimentation et au moins deux modules ( 4, 5, 6 ) de source pour l'alimentation en énergie électrique du au moins un module ( 9, 10, 11, ... N ) d'abaissement, dans lequel les modules ( 4, 5, 6 ) de source sont pourvus respectivement d'une unité ( 3 ) de commande de répartition de charge, qui est raccordée à un bus (2) et dans laquelle est mémorisée une courbe ( 1 ) caractéristique, qui représente, en fonction d'une tension ( $U_{LS}$ ) s'appliquant à ce bus ( 2 ), un pourcentage ( L ) d'utilisation de ce module ( 4, 5, 6 ) de source rapporté à la puissance nominale de ce module ( 4, 5, 6 ) de source respectif, **caractérisé en ce qu'**au moyen d'une unité ( 7 ) d'exploitation de chaque module ( 4, 5, 6 ) de source, pendant le démarrage de l'appareil d'automatisation,

   - on détecte la tension ( $U_{LS}$ ) s'appliquant au bus ( 2 ),
   - on déduit de cette tension ( $U_{LS}$ ) et de la courbe ( 1 ) caractéristique le pourcentage ( L ) d'utilisation de l'appareil d'automatisation, au regard de la puissance totale cédée par les modules ( 4, 5, 6 ) de source raccordés présentement à la ligne ( P1, P2 ) d'alimentation et
   - en fonction du pourcentage ( L ) d'utilisation, on commande un interrupteur ( 8 ) pouvant être commandé pour le raccordement du module ( 4, 5, 6 ) de source respectif à la ligne ( P1, P2 ) d'alimentation.

2. Appareil d'automatisation comprenant

   - au moins un module ( 9, 10, 11, ... N) d'abaissement raccordé à une ligne ( P1, P2 ) d'alimentation,
   - au moins deux modules ( 4, 5, 6 ) de source pour l'alimentation en énergie électrique du au moins un module ( 9, 10, 11, ... N ) d'abaissement, les modules ( 4, 5, 6 ) de source étant pourvus respectivement d'une unité ( 3 ) de commande de répartition de charge, qui est raccordée à un bus ( 2 ) et dans laquelle est mémorisée une courbe ( 1 ) caractéristique, qui représente le pourcentage ( L ) d'utilisation d'un module ( 4, 5, 6 ) de source rapporté à la puissance nominale de ce module ( 4, 5, 6 ) de source en fonction d'une tension ( $U_{LS}$ ) s'appliquant à ce bus ( 2 ),

**caractérisé en ce que**

chaque module ( 4, 5, 6 ) de source est pourvu d'une unité ( 7 ) d'exploitation, qui est conçue pour, pendant le démarrage de l'appareil d'automatisation, détecter la tension ( $U_{LS}$ ) s'appliquant au bus ( 2 ) et pour déduire de cette tension ( $U_{LS}$ ) et de la courbe ( 1 ) caractéristique, le pourcentage ( L ) d'utilisation de l'appareil d'automatisation, au regard de la puissance totale cédée par les modules ( 4, 5, 6 ) de source raccordés présentement à la ligne ( P1, P2 ) d'alimentation, et cette unité ( 7 ) d'exploitation est constituée en outre pour commander, en fonction du pourcentage ( L ) d'utilisation, un interrupteur ( 8 ) pouvant être commandé pour le raccordement du module ( 4, 5, 6 ) de source à la ligne ( P1, P2 ) d'alimentation.

FIG 1

# FIG 2

LS-BUS